# EUROPEAN PATENT APPLICATION

(11) **EP 0 831 043 A1**
(43) Date of publication of application: **25.03.1998**
(21) Application number: 97307352.1
(22) Date of filing: 22.09.1997
(51) Int. Cl.: B65G 51/03

(54) **Air conveyor for articles having a neck portion and a neck ring**

(30) Priority: 23.09.1996 US 710896
(71) Applicant: GOLDCO INDUSTRIES INC., Loveland Colorado 80537 (US)
(72) Inventor: Simkowski, Donald J., Loveland, Colorado 80538 (US)
(74) Representative: Molyneaux, Martyn William

(57) **Abstract**

An air controlled conveying device is disclosed for conveying unstable articles (9), such as plastic bottles, having a neck portion (11) with a neck ring (12) thereon. The unstable articles are conveyed in single file in the downstream direction along a path (18) established by guides (20,21) receiving the neck portions of the unstable articles therebetween. A plurality of plenums (28a-j) receive controlled air from a separate plenum (24) to establish different plenum air pressures, and air from the plurality of plenums (28a-j) is directed toward the neck portions (11) of the unstable articles (9) then between the guides (20,21) to urge the unstable articles along the guides at flow rates dependent upon the different air pressures then established in the plurality of plenums.

## Description

### Field of the Invention

This invention relates to an article conveying device, and, more particularly, relates to an air controlled conveying device for conveying unstable articles having a neck portion and a neck ring.

### Background of the Invention

It is often times necessary to convey, or move, articles between different locations, such as, for example, moving containers from one location to another in connection with manufacturing and/or filling of the containers, and such articles are now commonly moved by belts and/or air.

Movement of articles, such as cans, along a path by air normally requires directing the air at an angle at the bodies of the cans, and various arrangements for application of air to urge cans along a path, either in mass or in single file, have heretofore been suggested and/or utilized, including, for example, various types and/or orientation of openings and/or various manners or types of air delivery systems, such as, again by way of example, the use of multiple plenums and/or air controllers (see, for example, U.S. Patent Nos. 4,730,955, 5,037,244, 5,222,840, and 5,417,524).

Particular difficulty has been encountered, however, in conveying unstable articles, such as plastic containers or bottles, in single file from one location to another location due to the tendency of such articles to easily tip during movement. Where such articles have a neck portion with a neck ring thereon, it is now known that such articles can be moved by providing guides to engage the bottom side of the neck rings of the articles and thereby suspend the articles, after which the articles can be moved by air directed at the articles (see, for example, U.S. Patent Nos. 4,284,370, 4,724,035, 4,938,636, 5,147,153, 5,299,889, and 5,501,552), and, often, with the side portions of the bottles being restrained by side rails and the like (see, for example, U.S. Patent Nos. 4,822,214, 5,028,174, 5,100,265, 5,161,919, and 5,246,097), or with the articles being restrained from tipping during air urged movement of the articles in single file by using guides having vertically spaced guide members contacting both the top and bottom sides of the neck rings of the articles (see, for example, U.S. Patent Nos. 4,284,370 and 5,501,552).

Thus, while various arrangements have been heretofore suggested and/or utilized for conveying unstable articles having a neck portion with a neck ring thereon, such arrangements have not included air controlled conveying of unstable articles applying air at different rates to the neck portions of the unstable articles as needed to more efficiently urge the unstable articles along guides having the neck portions of the unstable articles therebetween.

### Summary of the Invention

This invention provides an air controlled conveying device for conveying unstable articles having a neck portion and a neck ring. Unstable articles, such as plastic containers or bottles having a neck portion with a neck ring thereon, are conveyed in single file along a path established by guides with the guides being spaced apart from one another a distance sufficient to receive the neck portions of the unstable articles therebetween and be engagable with the neck rings.

The unstable articles are urged in the downstream direction along the guides by air directed through openings in the air discharge portions of a plurality of plenums receiving air under pressure through air passages from a separate plenum having air pressure established therein during normal operation, with a flow control in the air passages controlling the flow of air to the plurality of plenums so that different air pressures are established in at least a portion of the plurality of plenums whereby air, directed through the openings in the air discharge portions of the plurality of plenums, is directed toward the neck portions of the unstable articles then between the guides to thereby urge the unstable articles along the guides at flow rates dependent upon the different air pressures then established in the plurality of plenums.

It is therefore an object of this invention to provide an improved article conveying device.

It is another object of this invention to provide an air controlled article conveying device for conveying unstable articles having a neck portion and a neck ring.

It is still another object of this invention to provide an air controlled conveying device for conveying unstable articles having a neck portion with a neck ring thereon along a path established by spaced guides receiving the neck portions of the unstable articles therebetween and urging the unstable articles along the path by controlled air applied from a plurality of plenums.

It is yet another object of this invention to provide an air controlled conveying device for conveying unstable articles having a neck portion with a neck ring thereon that includes a first plenum providing controlled air under pressure to a plurality of second plenums to establish different air pressures in at least some of the plurality of second plenums with the air from the plurality of second plenums being directed at the neck portions of unstable articles then between the guides to urge the unstable articles along the path established by the guides at flow rates dependent upon the different air pressures then established in the plurality of plenums.

It is still another object of this invention to provide an air controlled conveying device with a first plenum and a plurality of second plenums each of which opens to the first plenum through an air passage having an air flow control therein for separately controlling the air pressure established in each of the plurality of second plenums.

It is still another object of this invention to provide an air controlled conveying device for conveying unstable articles having a neck portion with a neck ring thereon with the device having a deviation, or turn, therein.

With these and other objects in view, which will become apparent to one skilled in the art as the description proceeds, this invention resides in the novel construction, combination and arrangement of parts substantially as hereinafter described, and more particularly defined by the appended claims, it being understood that changes in the precise embodiment of the herein disclosed invention are meant to be included as come within the scope of the claims.

### Brief Description of the Drawings

The accompanying drawings illustrate a complete embodiment of the invention according to the best mode so far devised for the practical application of the principles thereof, and in which:
FIGURE 1 is a partial perspective view illustrating the device of this invention;
FIGURE 2 is a cross section view taken through lines 2-2 of one of FIGURE 1;
FIGURE 3 is a cross section view taken through lines 3-3 of FIGURE 2;
FIGURE 4 is a cross section view taken through lines 4-4 of FIGURE 2; and
FIGURE 5 is a partial top view illustrating a deviation, or turn, in the device of this invention.

### Description of the Invention

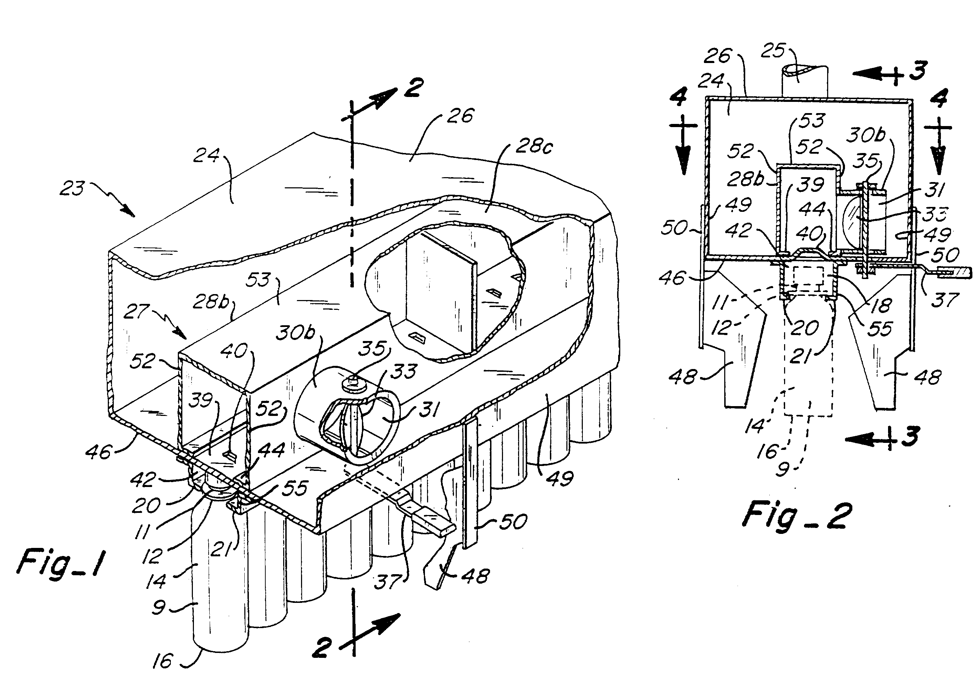

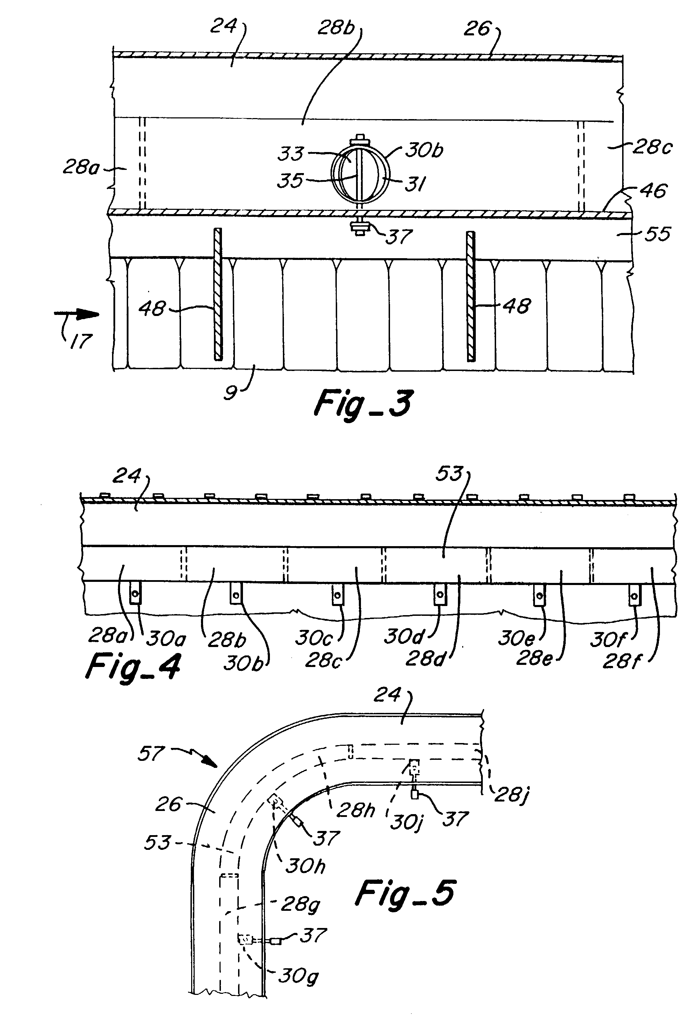

As indicated in FIGURES 1 and 2, articles 9 to be conveyed by the device of this invention are articles, such as plastic containers or bottles, having a neck portion 11 with a neck ring 12 on the inner, or lower, side of neck portion 11, a side, or body, portion 14 below neck portion 11, and a bottom portion 16. Articles 9 are conveyed in single file in the downstream direction (as indicated by the arrow 17 shown in FIGURE 3) along path 18 established by guides 20 and 21.

Plenum unit 23 includes a first, or outer plenum 24 having a predetermined, or selected, air pressure established therein (such as, for example, an air pressure equivalent to about six inches of water) during normal operation by a conventional blower or fan (not shown) preferably positioned outside plenum 24 and communicating with the plenum through conduit 25 opening into plenum 24, such as through top 26 of the plenum (the blower or fan could, at least for some uses, be inside plenum 24, if needed or desired).

A second plenum unit 27, including a plurality of second, or inner, plenums 28a-f (as indicated in FIGURES 1 through 4) and/or plenums 28g-j (as indicated in FIGURE 5) are positioned so that the plurality of second plenums extend along different parts of first plenum 24, as shown in FIGURES 4 and/or 5, and, therefore also extend along guides 20 and 21, as indicated in FIGURES 1, 2 and 3. Each of the plurality of second plenums is separately connected with, or opened to, first plenum 24 through air passage units 30a-f (as indicated in FIGURES 1 through 4) and/or 30g-j (as indicated in FIGURE 5) for separate delivery of air from plenum 24 to the second plenums.

As best shown in FIGURES 1 and 2, each of the air passage units includes an air passage 31, preferably a short pipe or the like, having an air flow control 33. Air flow control 33 is an air valve and can be, for example, a movable air blocking element, such as a movable slide gate or a movable baffle (such as a butterfly damper). Baffle 33, as shown in the drawings, is mounted on rod 35 extending through air passage 31. An associated actuator, such as arm 37, is mounted on a portion of rod 35 that extends externally of air passage 31 and normal to rod 35 so that arm 37 is externally available, as best indicated in FIGURES 1 and 2.

Baffle 33 is rotated within air passage 31 by rotation of rod 35 through movement of arm 37 (the arm is movable back and forth along a horizontal plane where the rod extends vertically through horizontally positioned air passage, as is specifically shown in FIGURES 1 through 3) to thereby control the air flow from plenum 24 to the second plenums.

Baffle 33 is preferably a thin circular plate having a radius slightly smaller than that of air passage 31 and can be readily positioned fully open by arm 37 with the baffle parallel to the direction of air flow through air passage 31, can be positioned fully closed with the baffle normal to the direction of air flow through air passage 31, and can be positioned, or moved, to any selected position between the fully open and fully closed positions to thereby quickly enable selection of the air pressure to be established in each of the second plenums so that the second plenums provide an air flow at a rate, as needed, at any particular time and/or under any particular condition.

While not shown, it is to be realized that a conventional readily releasable fastener is normally provided to lock each of the arms 37 in the desired selected position, and that indicia is likewise normally provided adjacent to arms 37 to indicate positioning of the baffle corresponding to the then selected arm position.

It is also meant to be realized that the specific and now preferred arrangement for air passage and/or air control could be modified, and that control of the baffles and/or arms for each of the air control units could, for example, include electronic and/or electro-mechanical units and/or be program controlled.

The air pressure to be established in each of the plurality of second plenums may be different for all, or some, of the different ones of the plurality of second plenums (different air flow rates are usually needed at different parts of the guides to maintain the needed, or desired, overall flow of unstable articles along the guides to achieve maximum performance of the device), and, as brought out above, the air pressure established in any of the plurality of second plenums may be established, or adjusted, as needed, by the associated air passage units (by way of example, the air pressure in different ones of the plurality of second plenums may be the same in some plenums and different in others, and different air pressures equivalent to, for example, one, one and one-half, and two, or one, two, and three inches of water may be established, with the range normally varying, for example, between the equivalent of about one and three inches of water).

Each of the plurality of second plenums includes an air discharge portion 39 having openings 40 therein through which air is directed from the plurality of second plenums toward the guides, and, more particularly, toward area 42 above the guides having the neck portions 11 of the unstable articles 9 thereat.

As indicated in FIGURES 1, 3, and 4, the plurality of second plenums are preferably positioned within first plenum 24 and are spaced in the downstream direction along the first plenum. More specifically, each of the plurality of second plenums has a flange 44 that is mounted on the bottom wall 46 of plenum 24. Bottom wall 46 of plenum 24 can extend under the second plenums to form a bottom wall for each of the second plenums, as shown, or, alternately, each of the second plenums could have a separate bottom wall aligned with, or adjacent to, bottom wall 46 of plenum 24 with bottom wall 46 not extending under the second plenums. As indicated, air discharge portion 39 is positioned at the bottom wall for the second plenums and discharges air through openings 40 therein toward the area above the guides.

As also indicated in FIGURES 1, 3, and 4, a plurality of side guide braces 48 may be mounted at the lower sides 49 of plenum 24 by means of mounting arms 50 with the braces being spaced along plenum 24 (about every two feet for example). Suitable support structure (not shown) is provided to support plenum 24 (normally from a ground, or floor, level).

Each of the second plenums also includes side walls 52 that extend upwardly from flanges 44, and a top wall 53. As best shown in FIGURES 1 and 2, one side wall 52 of each of the plurality of plenums has an associated air passage 31 therein through which controlled air is separately introduced into each of the second plenums in the manner as above set forth.

Air discharged from each of the plurality of second plenums through air discharge portion 39 is directed at an angle through openings 40 in the air discharge portion (which openings may be, for example, notches) toward guides 20 and 21.

Guides 20 and 21 are mounted on a support 55 with the guides adjacent to air discharge portions 39 of the plurality of second plenums so that air directed toward the guides engages the neck portions of the unstable articles then between the guides to thereby urge the unstable articles along the guides (with the plurality of second plenums within the first plenum and the air discharge portions at the bottom of the plenums, support 55 mounts the guides below the plurality of second plenums).

While not shown, guides 20 and 21 could include a vertically spaced pair of guide members engagable with opposite sides of neck ring, or flange, 12 of an unstable article 9 then positioned upright with the neck portion 11 between the guides.

As shown in FIGURE 4, the unstable articles may be conveyed along a straight line path with the plurality of second plenums 28a-f being inside the outer plenum 24 and adjacent to one another. Each of the second plenums preferably extends for a distance of about ten feet along and above the path of the unstable articles being conveyed (this distance may, however be modified as needed for all or any ones of the second plenums). In addition, while six plenums are specifically illustrated in FIGURE 4 for providing air flows to urge the unstable articles downstream for a distance of about sixty feet, the number of second plenums utilized will depend upon the distance of conveyance and particular conditions encountered.

A deviation, or turn, 57 may be needed, for example, during conveyance of the unstable articles from a first position to a second position. A deviation, such as, for example, a turn of ninety degrees, is specifically illustrated in FIGURE 5 (other turns could be made in like manner).

As indicated in FIGURE 5, in order to establish such a turn, the first plenum 24 and guides 20 and 21 are turned at a constant angle until the desired turn is completed, and usually a single one of the plurality of second plenums (designated 28h in FIGURE 5) is likewise angled until the desired turn is completed (more than one of the plurality of second plenums could, however, be angled, if necessary to complete the turn).

It has been found that the air pressure delivered from second plenum 28h having the turn therein normally must be higher then the air pressure delivered from the adjacent straight second plenums (designated 28g and 28j in FIGURE 5) in order to maintain the required flow rate of unstable articles being conveyed (an air pressure equivalent to two inches of water, for example, may be required during the turn whereas an air pressure equivalent to one inch of water may be required in the straight line paths adjacent to the turn).

By utilizing the air controlled conveying device according to this invention, fewer pressure supply sources, including motors, blowers and/or fans, are needed for long path lengths over which the air must normally be supplied, or provided, with the air being directed toward the neck portions of the unstable articles, at different flow rates where needed, along the entire length of the path along which the unstable articles are conveyed.

As can be appreciated from the foregoing, this invention provides an air controlled conveying device for conveying unstable articles and, particularly, conveying unstable containers, such as plastic bottles, having a neck portion with a neck ring thereon.

## Claims

1. A device for air controlled conveying of unstable articles having a neck portion with a neck ring thereon, said device comprising:
first and second guides spaced from one another a distance sufficient to receive the neck portions of the unstable articles therebetween and to enable engagement of the neck rings of the unstable articles with said guides;
a first plenum having air pressure established therein during normal operation;
a plurality of second plenums having an air discharge portion with openings therein through which air is directed therefrom; and
air passages connecting said first plenum with said plurality of second plenums, said air passages controlling flow of air from said first plenum to said plurality of second plenums during normal operation so that different air pressures are established in at least a portion of said plurality of second plenums whereby said air directed through said openings in said air discharge portion of said plurality of second plenums is directed toward the neck portions of the unstable articles then between said guides to thereby urge the unstable articles along said guides at flow rates dependent upon said different air pressures then established in said plurality of second plenums.

2. The device of claim 1 wherein said first plenum extends along said guides, and wherein each of said plurality of said second plenums extends along a different part of said guides.

3. The device of either of claims 1 or 2 wherein said air passages separately connect said first plenum with each of said plurality of second plenums.

4. The device of any of claims 1 through 3 wherein said plurality of second plenums are within said first plenum.

5. The device of claim 4 wherein said first plenum has a bottom portion, wherein each of said plurality of second plenums has a bottom portion positioned at said bottom portion of said first plenum with said bottom portions of said plurality of second portions having said air discharge portion therein, wherein each of said plurality of second plenums has side portions extending upwardly from said bottom portion of said plurality of second plenums, and wherein one of said side portions of each of said plurality of second plenums has said air passages positioned therein.

6. The device of any of claims 1 through 5 wherein said first plenum has a pressure established therein higher than that established in said plurality of second plenums.

7. The device of claim 6 wherein said first plenum has an air pressure established therein that is about two to six times greater than said different air pressures established in said plurality of second plenums.

8. The device of either of claims 6 or 7 wherein at least three different selected air pressures are separately established in different ones of said plurality of second plenums.

9. The device of any of claims 1 through 8 wherein each of said air passages has an adjustable air flow control therein.

10. The device of claim 9 wherein each said adjustable air flow control includes an associated actuator for adjusting said air flow control.

11. The device of claim 10 wherein said adjustable air flow control in each of said air passages includes a movable air blocking element, and wherein said associated actuator includes an arm connected with said air blocking element to control positioning of said air blocking element to thereby adjustably control the flow rate of air through each of said air passages.

12. The device of any of claims 1 through 11 wherein said guides, said first plenum, and at least one of said plurality of second plenums have an angular deviation established therein.

13. The device of claim 12 wherein said first plenum and said at least one of said plurality of second plenums have an angular deviation therein substantially like that of said guides.

14. The device of either of claims 12 or 13 wherein said at least one of said plurality of second plenums has an air pressure established therein that is greater than adjacent ones of said plurality of second plenums.

15. The device of any of claims 1 through 14 wherein the unstable articles are plastic bottles.
